# EUROPEAN PATENT APPLICATION

(11) **EP 1 128 571 A1**
(43) Date of publication of application: **29.08.2001**
(21) Application number: 00301584.9
(22) Date of filing: 28.02.2000
(51) Int. Cl.: H04B 7/005, H04B 7/26

(54) **Device and method for measuring the power of electromagnetic signals**

(71) Applicant: LUCENT TECHNOLOGIES INC., Murray Hill, New Jersey 07974-0636 (US)
(72) Inventor: Eckl, Wolgang Franz, Spardorf 91080 (DE)
(74) Representative: Williams, David John

(57) **Abstract**

The invention relates to a device and a method for measuring the power of electromagnetic signals of a transmitter device, in particular for measuring the power of GMS signals discretely over time. The device according to the invention uses a plurality of detectors which are connected in parallel, in particular with different amplification factors, in order to cover a large dynamic range. In a series of iterative preliminary power measurements, the detector which is optimum for the signal level is determined using an evaluation circuit. Said detector carries out a precise main power measurement, preferably with a predefined bit sequence which can be used to regulate the transmission power of the transmitter device. With one embodiment of the invention, a variation range of the output power of the transmitter device of ± 0.5 dB has been achieved. The device is particularly cost-effective and stable with respect to temperature.

## Description

The invention relates to a device and a method for measuring the power of electromagnetic signals, in particular for measuring the power of GSM signals discretely over time.

Modern communications, in particular using mobile telephones, are of growing importance and form a rapidly expanding market. Time Domain Multiple Access (TDMA) techniques are typically used for mobile radios. One example of a TDMA Standard is the Global System for Mobile Communications (GSM), for example GSM 900 or GSM 1800. In order to establish a voice or data transmission link, a radio link, for example between a mobile radio subscriber and a base station, is set up on a free pair of channels of the GSM network. In order to comply with the GSM Standard it is necessary to keep the transmission power of the base station constant within ± 2 dB at normal temperature. For this reason, an active system is usually used to regulate the output power, the regulating operation being carried out either continuously or discretely over time. Such an active regulating operation usually contains a highfrequency detector which measures the power of the signals to be transmitted. In particular in the case of a regulating operation which is discrete over time, the output power on a GSM time slot must be measured very precisely over a large dynamic range. For example, for typical GSM signals a dynamic range of at least 40 dB must be covered. In order to achieve such a dynamic performance, complex and expensive amplifier circuits, for example detector modules, with a logarithmic characteristic curve have been used hitherto. However, these logarithmic detectors have the disadvantage that they are cost-intensive, sensitive to temperature and imprecise because their characteristic curve cannot be modelled precisely.

One cost-effective alternative comprises simple diode detectors, but these do not have the required dynamic. Diode detectors operate typically with adequate precision only in the quadratic characteristic curve range, which range has, however, only a dynamic performance of approximately 20 to 30 dB.

The invention is therefore based on the object of making available a device and a method for measuring the power of electromagnetic signals which cover a large dynamic range using cost-effective detectors.

A further object of the invention is to make available a device and a method for measuring power which provide a high degree of measuring precision and stability with respect to temperature.

The objects according to the invention are achieved in a surprisingly simple way by means of the device or the method for measuring the power of electromagnetic signals according to Claim 1 and/or Claim 10.

The device according to the invention measures the power of electromagnetic signals of a transmitter device which operates preferably in compliance with a TDMA Standard, for example GSM. A first switch is assigned to a transmitter device and receives the electromagnetic signals from it. A first preliminary power measurement is carried out with a first detector which is assigned to the first switch and receives the signals from the transmitter device via said switch. The first preliminary power measurement is used for a rough preliminary determination of the transmission power in a first time interval. The output signal of the first detector is analysed by an evaluation circuit which generates, as a function of the output signal of the first detector, a control signal using predefined values, which control signal is preferably used to control the first switch. In a second time interval, and depending on the status of the control signal, the first switch remains in its first state in which the first detector receives the electromagnetic signals or changes, for example when the signal drops below a predefined signal threshold, into a second state in which a second detector which is also assigned to the first switch receives the electromagnetic signals. In the second time interval, a second power measurement is performed by that detector which is assigned to the transmitter device as a result of the control signal in the second time interval. The second power measurement preferably constitutes the actual main power measurement.

One development of the invention also comprises a third detector, with the result that the second power measurement of the second detector also simply constitutes a preliminary power measurement. The evaluation circuit then decides, on the basis of defined stipulations, whether the second detector remains assigned to the transmitter device after the second time interval, or the first switch changes into a third state in which the third detector receives the electromagnetic signals from the transmitter device, in order to perform the main power measurement in a third time interval. It is apparent to the person skilled in the art that if the first detector remains assigned to the transmitter device after the first preliminary power measurement, this state is preferably maintained up to the third time interval because, in this case, the second detector cannot perform a power measurement. In this case, the main power measurement is performed in the third time interval by the first detector.

In addition, it is apparent to the person skilled in the art that the device according to the invention and the method are not restricted to three detectors but as many detectors as desired can be used in an analogous way, which detectors can be successively switched forward from time interval to time interval until the detector which is the optimum one for the signal power is assigned to the transmitter device. Said detector then performs the main power measurement. The invention has the advantage that the successive switching forward of detectors enables simple and cost-effective detectors to be used with dynamic ranges which are relatively small but each differ from one another, with the result that the dynamic coverage which is provided by the entire device can be of virtually any desired magnitude. Furthermore, this has the advantage that that detector which ultimately performs the main power measurement can be operated in its optimum sensitivity range, for example in the range of a quadratic characteristic curve. The detectors are preferably embodied as diode detectors which comprise, for example, amplifiers and rectifier modules. Diode detectors are advantageously cost-effective, stable with respect to temperature and relatively precise within their quadratic characteristic curve. The amplifiers preferably have different amplification factors in order to cover different dynamic ranges, the ranges of the individual detectors preferably overlapping. For this reason, it is also useful to embody one or more diode detectors without an amplifier, or possibly to use attenuators.

In one advantageous development, the device comprises a second switch which performs the assignment of the detectors to the evaluation circuit. The second switch preferably changes the state essentially simultaneously with the first switch, with the result that the evaluation circuit is assigned to that detector which also has a synchronous assignment to the transmitter device. Here, the second switch is driven, as is the first switch, by the evaluation circuit. The evaluation circuit preferably comprises an analogue/digital (A/D) converter and a control circuit. The control circuit receives the digital output signals of the A/D converter and controls the first and/or second switch using predefined threshold values. The method according to the invention is expediently started with the most insensitive detector and changes to the next most sensitive detector, for example the one with the next largest amplification factor if the output signal of the detector which is currently assigned drops below a predefined threshold. The entire measurement, analysis and switching cycle preferably takes place within a so-called time slot. In order to achieve a particularly high level of precision, the main power measurement is preferably performed in the last time interval using a predefined reference or training signal instead of the useful signal of the transmitter device.

The power of the transmitter device can be appropriately adjusted as a function of the result of the main power measurement. The variation range which is obtained with the device according to the invention complies advantageously with the maximum value required by the GSM Standard; a variation range of approximately ± 0.5 dB is achieved at the transmitter device, and of approximately ± 1 dB for the power emitted by an antenna.

The invention is explained in more detail below using exemplary embodiments and with reference to the drawings, in which:
- Fig. 1: shows a block circuit diagram of an embodiment of the invention with a first switch and a second switch, each in a starting state,
- Fig. 2: shows a block diagram of the embodiment from Fig. 1, the first and second switches each being in a third state, and
- Fig. 3: shows the chronological sequence of the preliminary power measurements and main power measurements within a GSM time slot.

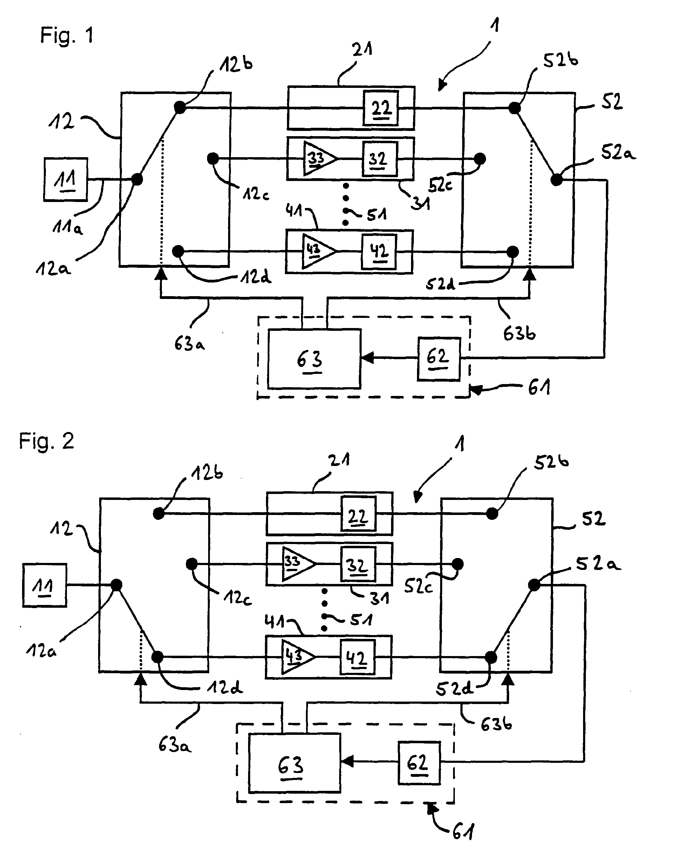

Fig. 1 shows a device for measuring the power of electromagnetic signals for the GMS network. In order to determine the power of the electromagnetic signals of a transmitter device 11, the signals are fed via a feeder line lla to a first terminal 12a of an input switch 12. However, further modules which are not shown, for example directional couplers, can also be located between the transmitter device and the first switch in this context. The input switch 12 is located in a starting state in which it connects the first terminal 12a to the second terminal 12b. The signals are fed from the second terminal 12b to a first detector 21. The first detector 21 contains a rectifier module 22 for the electromagnetic signals. The first detector 21, which carries out the most insensitive first preliminary power measurement, does not have an amplifier upstream of the rectifier module 22 in this exemplary embodiment. The signals from the rectifier module 22 which are converted into voltage signals are transferred to a second terminal 52b of an output switch 52. The output switch 52 is in a starting state in which it connects the second terminal 52b to the first terminal 52a. The amplified and rectified signals are transmitted from the first terminal 52a of the output switch 52 to an analogue/digital (A/D) converter 62, which constitutes a component of the evaluation circuit 61. The A/D converter 62 digitizes the level of the received signals and thus determines the output power of the signals transmitted by the transmitter device 11. A digital output signal of the A/D converter 62 is transmitted to a control circuit 63 which also constitutes a component of the evaluation circuit 61. The control circuit contains predefined threshold values and generates, as a result of the first preliminary power measurement, a control signal from the comparison of the signals received by the A/D converter with the predefined threshold values. If the signal which is received by the A/D converter exceeds the corresponding threshold value, the first detector 21 for the signals which are transmitted by the transmitter device 11 are sufficiently sensitive and the control signal assumes a state so that the input switch 12 and the output switch 52 both remain in their starting state. This is implemented in the simplest case by virtue of the fact that the control circuit 63 does not generate any control signal at all. If the signal which is transmitted by the A/D converter 62 to the control circuit 63 drops below the corresponding, predefined threshold value, this means that the sensitivity of the first detector 21 is not sufficient for the signal which is transmitted by the transmitter device 11. In this case, the control circuit 63 generates a control signal which is transmitted to the input and output switches 12 and 52 via the two control lines 63a and 63b. This control signal causes the input and output switches 12 and 52 to switch over into a second state in each case, in which state the first terminal 12a of the input switch 12 is connected to the third terminal 12c, and the third terminal 52c of the output switch 52 is connected to the first terminal 52a (not shown). In these second switch states, the signals transmitted by the transmitter device 11 are amplified by an amplifier 33 and fed to a rectifier module 32. The amplifier 33 and the rectifier module 32 form a diode detector 31. The rectified signals are fed via the third terminal 52c and the third terminal 52a of the output switch 52 to the A/D converter 62 for digitization. Owing to the amplifier 33, the rectified signal is now significantly higher than in the preceding step in which the first detector 21 was used. In a second preliminary power measurement, the digitized signal is transmitted from the A/D converter 62 to the control circuit 63 and compared with the predefined threshold value. If the signal exceeds the predefined threshold value, the input and output switches 12 and 52 each remain in the second state because the sensitivity of the second detector 31 is adequate for the signals transmitted by the transmitter device 11. If this signal which is amplified and rectified by the second detector 31 drops below the predefined threshold value of the control circuit 63, the control circuit 63 transmits a control signal to the input and output switches 12 and 52 via the control lines 63a and 63b. As a consequence of this control signal, the input and output switches 12 and 52 each change, essentially simultaneously, from the second state into a respective third state in which the first terminal 12a is connected to the fourth terminal 12d of the input switch 12, and the fourth terminal 52d is connected to the first terminal 52a of the output switch 52. This state of the device 1 is illustrated in Fig. 2. In this last-mentioned state, the third diode detector which is composed of a third amplifier 43 and of a rectifier module establishes the connection between the transmitter device 11 and the evaluation circuit 61. The amplifier 43 of the third detector 41 has a higher amplification factor than the amplifier 33 of the second detector 31. The dots 52 indicate that the device is not restricted to the use of three detectors 21, 31 and 41, but any desired number of further detectors with advantageously rising amplification factors can be provided between the second detector 31 and the third detector 41. In this case, the number of possible switch states and measurement steps increases correspondingly. The diode detectors which are used have a dynamic range of approximately 20 dB to 30 dB, in which they have an approximately quadratic characteristic curve. For this reason, the amplification factor of the amplifier 33 is expediently approximately 15 dB to 20 dB, and the amplification factor of the amplifier 43 is approximately 30 dB to 40 dB. The resulting different dynamic ranges ensure that the measurement ranges with quadratic characteristic curves of the diode detectors overlap, in order to achieve a complete coverage of the required dynamic range. Consequently, the device 1 with three detectors covers a dynamic range of approximately 50 dB to 70 dB, within which at least one detector operates in the optimum quadratic characteristic curve range for each signalling power.

The measurement and control processes described above constitute only a preliminary power measurement of the electromagnetic signals transmitted by the transmitter device 11. The series of iterative preliminary power measurements using the detectors which are connected in parallel is used essentially to determine, by means of the evaluation circuit, the optimum detector for the power of the electromagnetic signals. When the cycle of preliminary power measurements described above is terminated, the device 1 is in a state in which that detector which has the amplification factor which is the optimum one for the power of the electromagnetic signals is connected to the transmitter device 11 and the evaluation circuit 61 via the input and output switches 12 and 52. In this state, the main power measurement takes place in a so-called training sequence using the detector which has been found to be the optimum one. Owing to the iterative switching forward of the detectors, it is advantageously possible for the main power measurement to take place in the range of the quadratic characteristic curve of the respective diode detector. In order to obtain a particularly high level of measuring accuracy for the power of the electromagnetic signals, a training signal, instead of the useful signal, is transmitted by the transmitter device 11 in the training sequence. In this exemplary embodiment, the training signal is a predefined bit pattern which is also used for the synchronization of the time slot between the transmitter device and receiver device. This training signal is amplified by the detector with the optimum amplification factor and digitized by the A/D converter 62. If on the other hand the power measurement of the useful signal, for example voice signals of a radio link, is sufficient for the necessary accuracy of the preliminary measurements, it is, however, also possible to carry out the preliminary measurements using the training signal. The result of the main power measurement can finally be used to regulate the transmission power of the transmitter device.

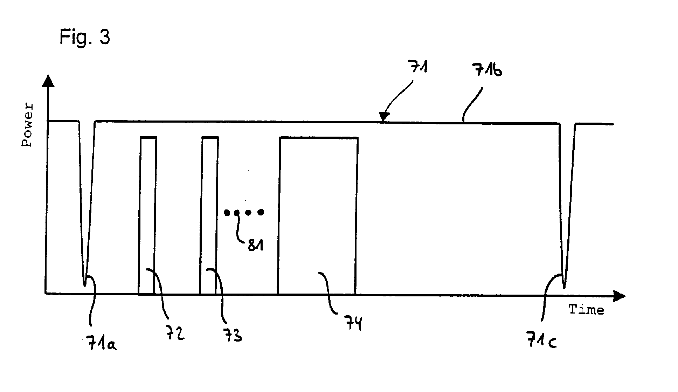

Fig. 3 shows the variation over time of a measurement cycle of the time-discrete power measurements for the device 1 illustrated in Fig. 1 and Fig. 2. The variation over time is represented on the X axis and the power of a GSM signal 71 which has been transmitted by the transmitted device 11 is plotted on the Y axis. Essentially one time slot 71b of the signal 71 is represented, said time slot 71b being bounded by a start power drop 71a and end power drop 71c. The entire measuring cycle which is described above in conjunction with Fig. 1 and Fig. 2 occurs within the time slot 71b. The first preliminary power measurement using the first detector 21 in the starting state of the input and output switches 12 and 52 takes place in a first measurement interval 72. The second preliminary power measurement using the second detector 31 takes place (if it takes place owing to the signalling power) in a second time interval 73 which is positioned later on the time axis than the first time interval 72. If more than the three detectors 21, 31 and 41 which are shown in Fig. 1 are used, further time intervals, which are symbolized by the dots 81, are provided for each further detector. In a third time interval 74, which occurs later than the second time interval 73, the main power measurement of the electromagnetic signals which are transmitted by the transmitter device 11 is carried out. Because this reference measurement is intended to be more precise than the rough preliminary power measurements which take place in the first and second time intervals 72 and 73, the third time interval 74 lasts longer than the first and second time intervals 72 and 73. After the measuring cycle has been completely terminated, the device 1 returns to its starting state in order to be able to perform a new power measurement in a subsequent time slot.

It is clear to the person skilled in the art that the device of the embodiment from Fig. 1 and Fig. 2 is to be understood by way of example, and that the device according to the invention can be varied widely, in particular by means of various embodiments of the switches, detectors and of the evaluation circuit, in order to adapt the device to the conditions of the signals, for example the necessary dynamic range.

## Claims

1. Device (1) for measuring the power of electromagnetic signals (71), comprising
a transmitter device (11),
a first detector (21),
a second detector (31),
an evaluation circuit (61), which can be assigned to the first and/or second detector (21, 31),
a first switch (12) which defines a first state (12b) and a second state (12c), the first detector (21) of the transmitter device (11) being assigned to the transmitter device (11) in the first state (12b), and the second detector (31) being assigned to the transmitter device (11) in the second state (12c).

2. Device according to Claim 1, which comprises a third detector (41) which is assigned to the transmitter device (11) in a third state (12d) of the first switch (12).

3. Device according to Claim 1 or 2, in which the first switch (12) can be switched by the evaluation device (61).

4. Device according to one of the preceding claims, in which the first, second and/or third detectors (21, 31, 41) comprise amplifiers (33, 43) and/or rectifier modules (22, 32, 42).

5. Device according to one of the preceding claims, in which the first, second and/or third detectors (21, 31, 41) have different dynamic ranges.

6. Device according to one of the preceding claims, which comprises a second switch (52) which defines a first and second and/or third state (52b, 52c, 52d), the evaluation circuit (61) being assigned to the first, second or third detector (21, 31, 41) in the first, second and third states (52b, 52c, 52d) of the second switch (52).

7. Device according to Claim 6, in which the second switch (52) can be switched by the evaluation circuit (61).

8. Device according to Claim 6 or 7, in which the evaluation circuit (61) comprises an A/D converter (62) which is assigned to the second switch (52) and/or a control switch (63) which is assigned to the A/D converter (62), the first and/or second switch (12, 52) being capable of being switched by the control circuit (63).

9. Device according to one of the preceding claims, which is adapted for electromagnetic signals (71) of a TDMA Standard, in particular of a GSM Standard.

10. Method for measuring the power of electromagnetic signals (71) comprising a transmitter device (11), in which method
a first switch (12) is in a first state (12b) in a first time interval (72), in which first state (12b) a first detector (21) performs a first, preliminary measurement of the power of the electromagnetic signals,
an evaluation circuit (61) generates, as a function of an output signal of the first detector (21), a control signal which assumes a first or second state, the first switch (12) remaining in the first state (12b) in a second time interval (73) if the control signal has the first state, the first switch (12) changing into the second state (12c) in which the second detector (52) of the transmitter device (11) is assigned if the control signal assumes the second state, and
that detector (21, 31) which is assigned to the transmitter device in the second time interval (73) performs a second power measurement of the electromagnetic signals which are transmitted by the transmitter device (11).

11. Method according to Claim 10, in which
the second power measurement constitutes a preliminary power measurement, and the evaluation circuit (61) generates, as a function of an output signal of the second detector (52), a control signal which assumes a third or fourth state, the first switch (12) remaining in the second state (12c) in a third time interval (74) if the control signal has the third state, the first switch (12) changing into a third state (12d) in which a third detector (41) is assigned to the transmitter device (11) if the control signal has the fourth state, and
that detector (21, 31, 41) which is assigned to the transmitter device in the third time interval (74) performs a power measurement of the electromagnetic signals.

12. Method according to Claim 10 or 11, in which the third time interval (74) occurs later than the second time interval (72), and/or the second time interval (72) occurs later than the first time interval (71).

13. Method according to one of the preceding method claims, in which a training signal for the main power measurement is used in that aforesaid time interval (74) which occurs last chronologically.

14. Method according to one of the preceding method claims, in which electromagnetic signals (71) in compliance with a TDMA Standard, in particular a GSM Standard, are used.

15. Method according to Claim 14, in which the first and second and/or third time intervals (72, 73, 74) are positioned within a GSM time slot (71b).

16. Method according to one of the preceding method claims, in which the first and/or second and/or third detectors (21, 31, 41) essentially amplify and/or rectify the electromagnetic signals (71).

17. Method according to Claim 16, in which selections are made such that the amplification factor of the third detector (41) is greater than the amplification factor of the second detector (31), and/or the amplification factor of the second detector (31) is greater than the amplification factor of the first detector (21).

18. Method according to one of the preceding method claims, in which the control signal assumes the second state if the signal level drops below a predefined threshold at an output of the first detector (21), and/or the control signal assumes the fourth state if the signal level drops below a predefined threshold at an output of the second detector (31).

19. Method according to one of the preceding method claims, in which a second switch (52) is in a first, second or third state (52b, 52c, 52d) if the first switch (12) is in the first, second or third state (12b, 12c, 12d), respectively, as a result of which the evaluation circuit (61) is assigned to the first, second or third detectors (21, 31, 41), respectively.

20. Method according to one of the preceding patent claims, in which the output signals of the first and/or second and/or third detectors (21, 31, 41) are digitized by an A/D converter (62), and the control signal is generated by a control circuit (63) as a function of the output signal of the A/D converter (62) .
